# EUROPEAN PATENT APPLICATION

(11) **EP 1 431 786 A2**
(43) Date of publication of application: **23.06.2004**
(21) Application number: 03027968.1
(22) Date of filing: 05.12.2003
(51) Int. Cl.: G02B 6/38, G02B 6/44

(54) **Angled spring push for optical ribbon cable**

(30) Priority: 18.12.2002 US 323120
(71) Applicant: Corning Cable Systems LLC, Hickory, North Carolina 28603-0489 (US)
(72) Inventor: Banas, Vladimir, Mount Airy NC 27030 (CA); Spriggle, Mark W., Hickory NC 28601 (US); Wagner, Karl M., 82131 Stockdorf (DE)
(74) Representative: Sturm, Christoph, Dipl.-Ing.

(57) **Abstract**

A multifiber optical ribbon cable 2 and a multifiber optical ribbon cable connector assembly 10 allow the cable to extend from the rear of the connector assembly at an angle of ninety (90) degrees. The multifiber optical ribbon cable connector assembly 10 includes a two piece spring push adapter 30 that holds a coil spring 20 between the spring push adapter 30 and an optical ferrule 12. The spring push adapter 30 includes a curved, closed channel 40, which completely encloses that segment 4 of the cable 2, a provides for a smooth transition as a multifiber optical ribbon cable segment 4 bends and twists through ninety degrees. This two piece spring push adapter 30 can also be assembled on the cable 2 after the optical fibers are terminated to the ferrule 12.

## Description

### FIELD OF THE INVENTION

This invention is related to multifiber optical ribbon cables and to connectors for use with those cables. More specifically this invention is related to an angled connector assembly in which a multifiber optical ribbon cable extends at an angle, such as an angle of ninety (90) degrees, from the connector. This application is also related to a fiber optic ribbon cable in which a optical ferrule is spring loaded so that it is properly positioned for connecting optical fibers in a multifiber ribbon cable with a mating optical device or component.

### BACKGROUND OF THE INVENTION

US Patent 5,806,175 discloses a multifiber optical ribbon cable and a connector assembly for use with that cable. The connector disclosed in that patent is a version of a standard MTP fiber optic connector of the type used for terminating multifiber optical ribbon cable. The ends of optical fibers are terminated to a ferrule, which positions the fiber ends in alignment with optical means in a mating component. A coil spring engages the ferrule to apply a continuous force to the ferrule and prevent it from changing position. The other end of the spring abuts a spring push, which is attached to a housing containing the ferrule. In that assembly the multifiber optical ribbon cable extends straight from the rear of the connector assembly. However, in some applications the fiber should preferably extend at an angle relative to the connector assembly to dress the cable in a direction that is suitable for the specific application. For example, if a number of multifiber optical ribbon cables are connected side by side to optical components or the rear of the assembly, it is often preferred that cable extend parallel to the rear of that assembly. That would require the cables to bend through an angle of ninety (90) degrees. Multifiber optical ribbon cables in which the optical fibers are located side by side do not easily bend in the plane of the ribbon cable.

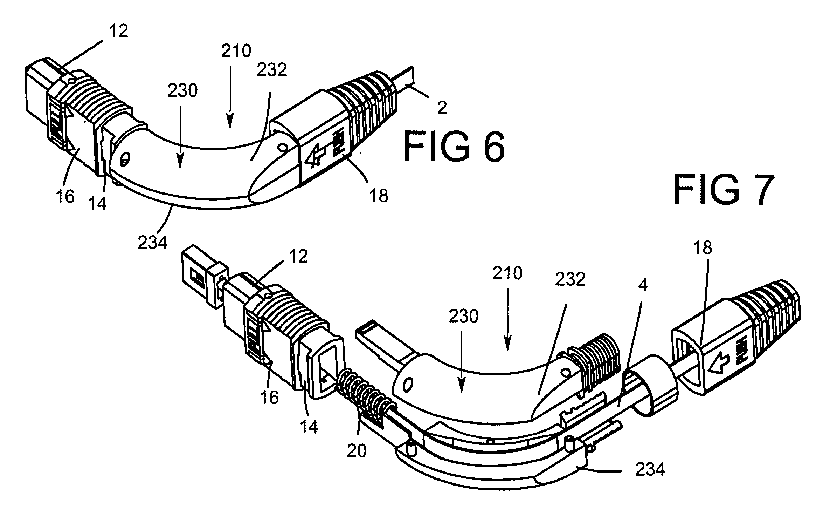

A prior art adapter in which a multifiber optical ribbon cable can be twisted and bent through an angle of ninety (90) degrees is shown in Figure 5. This connector assembly includes a one-piece plastic spring push adapter 130 that can be connected to strandard components of an MTP connector, which is commonly used with multifiber optical ribbon cables. The spring push adapter 130 includes an opening 132 along its external portion, and a bent and twisted multifiber optical ribbon cable segment can be positioned within the spring boot 130. Although this ninety (90) degree spring push adapter 130 does dress the multifiber optical ribbon cable through an angle of ninety (90) degrees, this adapter 130 must be placed on the end of a multifiber optical ribbon cable prior to termination of the optical fibers at the end of the cable to an MTP ferrule. Termination is the most critical step and the connector assembly would be simplified if the ninety (90) adapter could be assembled after the optical fibers are terminated to the ferrule. Furthermore, an adapter that totally encloses the cable segment as it twists and bends would also be preferable to the prior art version shown in Figure 5, because the twisted and bent portion of the cable will be protected. When the adapter 130 slides along a fiber optic cable, the twist and bend in the cable can be confined to a small portion of the cable, which may not be uniformly twisted and bent between ends of the slot 132. The curvature of the twisted and bent portion can therefore exceed the limit at which significant loss can occur in the optical fibers. The prior art embodiment of Figure 5 also includes a slot 138 extending through a knurled portion 136 over which a crimp ring is attached. This slot significantly reduces the strength of the knurled section adversely affecting the integrity of the crimp to strength members and to the sheath of a multifiber optical ribbon cable. The multifiber optical ribbon cable connector assembly and ninety (90) spring push adapter of the invention disclosed herein incorporate features achieving these results.

### SUMMARY OF THE INVENTION

A multifiber optical ribbon cable connection assembly according to this invention can include a ferrule, a spring and a spring push. The spring would be positioned between the ferrule and the spring push. The spring push has a first end and a second end with a curving channel extending between the first and second end. This channel permits a multifiber optical ribbon cable to turn through an angle between the first and second ends of the spring push. This spring push has two opposed sections matable adjacent an exterior periphery of the channel and matable adjacent an interior periphery of the channel.

Such an adapter could be used with a multifiber optical ribbon cable and multifiber optical ribbon cable connector in which the multifiber optical ribbon cable can twist and bend so that the cable exits the connector at an angle. In this version, first and second adapter sections would acccomodate a segment of multifiber optical ribbon cable. A channel is formed by the matable first and second adapter sections, and the channel is curved so that the multifiber optical ribbon cable can bend to exit the channel in a direction transverse to a direction in which the multifiber optical ribbon cable enters the channel. The channel tapers from a relatively larger central section toward opposite ends so that the cable twists and bends evenly and the radius of a short section is less than the critical radius at which loss of optical signal occurs because of excessive bending of the optical fibers. A first portion of the channel, adjacent a first end of the adapter, has a generally oval cross section and a second portion of the channel, adjacent the second end of the adapter, also has a generally oval cross section. The oval cross sections of the first and second portions extend transversely relative to each other for receiving a twisted multifiber optical ribbon cable. A central portion of the channel between the first and second generally oval portions would have a larger cross sectional area than the first and second generally oval portions so that the segment of multifiber optical ribbon cable can twist between the first and second ends of the adapter.

A method of attaching a multifiber optical ribbon cable to a multifiber optical ribbon cable connector of this type would permit the multifiber optical ribbon cable to extend from the multifiber optical ribbon cable connector at an angle. This method could include the following steps. An end of the multifiber optical ribbon cable would be terminated to a connector ferrule. Then a segment of the multifiber optical ribbon cable would be twisted and bent to position the segment of the multifiber optical ribbon cable in a curved groove formed in a first spring push adapter section with a spring extending between the first spring push adapter section and the connector ferrule. A second spring push adapter section would then be mated to the first spring push adapter section to enclose the segment of the multifiber optical ribbon cable in a channel formed by grooves in mated spring push adapter sections.

### BRIEF DESCRIPTION OF THE DRAWINGS

Figure 1 is a three dimensional view of a multifiber optical ribbon cable connector assembly including a ninety (90) degree spring push adapter and one end of a multifiber optical ribbon cable to which the connector is terminated.
Figure 2 is an exploded three dimensional view of the multifiber optical ribbon cable connector assembly of Figure 1 showing the manner in which a segment of the multifiber ribbon cable is positioned within the ninety (90) degree spring push adapter.
Figure 3 is a plan view of one section of the ninety (90) degree spring push adapter. Figures 3A-3E are cross-sectional views taken respectively along sections lines 3A-3E in Figure 3.
Figure 4 is a three dimensional view of the two mating sections of the ninety (90) degree spring push adapter.
Figure 5 is a view of a prior art ninety (90) degree adapter for use in a multifiber optical ribbon connector.
Figure 6 is a view of an alternate embodiment of a multifiber optical ribbon cable connector assembly including a ninety (90) degree spring push adapter for use in a configuration in which the cable is not required to twist.
Figure 7 is an exploded three dimensional view of the assembly shown in Figure 6.
Figure 8 is a view of a third alternate embodiment of a multifiber optical ribbon cable connector assembly including a ninety (90) degree spring push adapter for use in a configuration in which the cable is required to twist through an additional ninety (90) degrees for proper orientation.
Figure 9 is an exploded three dimensional view of the assembly shown in Figure 8.

### DETAILED DESCRIPTION OF THE PREFERRED EMBODIMENTS

Multifiber optical ribbon cable 2 includes a plurality of optical fibers in a generally planar array. These optical fibers and strength members are enclosed in a cable sheath 8 in a conventional fashion. One end 6 of the multifiber optical ribbon cable 2 can be terminated to connector assembly 10 bonding the exposed optical fibers at the cable end to a ferrule 12. In the preferred embodiment depicted herein, the multifiber optical ribbon cable connector assembly 10 includes conventional MTP fiber optic connector components. In addition to the ferrule 12, the MTP multifiber optical ribbon cable assembly 10 includes additional standard components including an inner housing 14, an outer shroud 16, a cable boot 18, a coil spring 20 and a crimp ring 22. These components are substantially identical to the components of an MTP multifiber optical ribbon cable connector assembly, such as that shown in US Patent 5,806,175. The connector assembly shown therein is used to terminate a multifiber optical ribbon cable, which extends straight from the rear of the connector without any twist or bend in the cable.

The primary difference between that prior art fiber optic connector and the multifiber optical ribbon cable connector assembly 10 is the ninety (90) degree bend and twist spring push adapter 30, which permits the multifiber optical ribbon cable 2 to extend away from the rear of the connector 10 at a right angle. In the preferred embodiment, the adapter comprises a spring push, but the term adapter as used herein is intended to be a generally descriptive term, including a spring push, and the term adapter is not used in a limiting sense. This ninety (90) degree or angled spring push adapter 30 replaces a conventional straight spring push adapter of the type that is used with conventional MTP multifiber optical ribbon cable connectors. However, the spring push adapter 30 is assembled to remaining standard components in much the same manner as in a conventional straight MTP fiber optic connector. The spring push adapter 30 and the ferrule 12 are located on opposite ends of a coil spring 20, which presses the ferrule 12 toward a mating optical component so that the polished end face will abut other fibers to which they are to be mated.

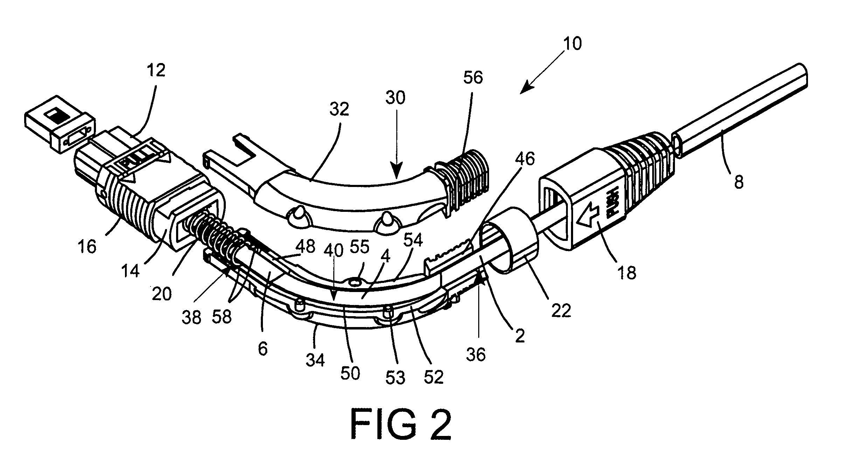

Spring push adapter 30 comprises two mirror image or clamshell mating spring push adapter sections 32 and 34. These two spring push adapter sections 32 and 34 mate along a central plane. Peripheral surfaces 52 and 54 extend respectively from the channel 40 to an exterior edge and an interior edge of the spring push adapter sections 32 and 34. As shown in Figure 2, the surface forming the exterior periphery 52 of channel 40 on the adapter section 34 includes protruding pins 53. The surface forming the interior periphery 52 includes a cavity 55 that is dimensioned to receive a pin having approximately the same size as a pin 53. Opposing pins and cavities are located on the mirror image adapter section 32 so that opposed pins will be received within opposed cavities when the two adapter sections 32 and 34 are mated.

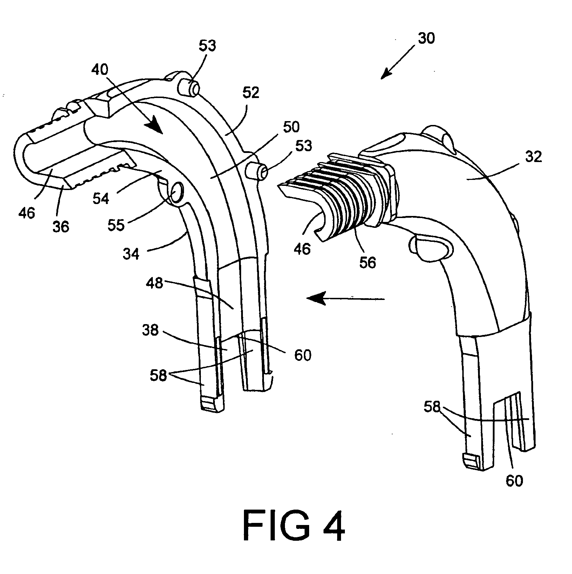

The spring push adapter 30 also includes a knurled surface 56 on the exterior of the first spring push end 36. This knurled surface 56 is formed on both spring push adapter sections 32 and 34, so that the knurled surfaces 56 extends completely around the oblong first end 36 of the spring push adapter 30. The resulting continuous oblong end 36 is not interrupted by a slot, such as slot 138 on the prior art adapter 130. As will be subsequently discussed in greater detail, this continuous surface provides support for crimping a crimp ring 22 around the knurled surface 56 to secure strength fibers in the cable to the spring push adapter 30 and thus to the connector assembly 10 As best seen in Figure 4, the mating surfaces of the knurled portion of the spring push adapter 30 extend at an angle relative to the peripheral surfaces 52 and 54, which extend along a central plane in the preferred embodiment.

Locking tabs 58 are located on the second spring push adapter end 38 and extend on opposite sides of a spring stop surface 60. As shown in Figures 2 and 4, one end of the spring 20 will abut this spring stop surface 60 in the assembled multifiber optical ribbon cable connector 10. The two locking tabs 58 form cantilever beams which will engage the interior of the inner housing 14 to secure the ninety (90) degree spring push adapter 30 in the same manner as a conventional spring push would be assembled in the embodiment shown in a conventional MTP connector and in the connector shown in US Patent 5,806,175.

Spring push adapter 30 includes a curved channel 40 in which a multifiber optical ribbon cable segment 4 will be completely enclosed. The channel 40 extends from a first spring push adapter end 36 to a second spring push adapter end 38. The closed channel 40 is formed by opposed curved grooves 42 and 44 in adapter sections 32 and 34, which in the preferred embodiment each form half of the curved channel 40. The channel 40 includes a first generally oval portion 46, which forms a cable entrance at the first spring push adapter end 36. A second generally oval portion 48 forms a ribbon exit at the second spring push adapter end 38, which will be adjacent the ribbon end 6 and the ferrule 12.

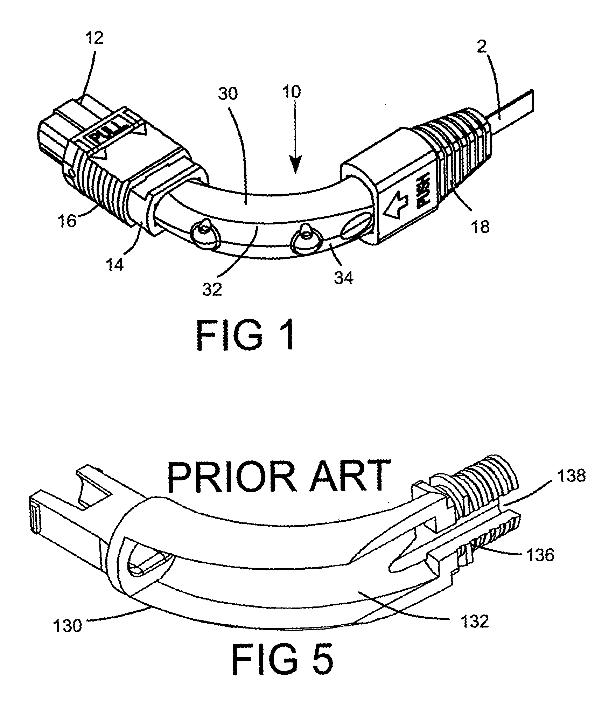

The closed, curved channel 40 also includes a central channel portion 50, that has sufficient volume to permit the cable segment 4, enclosed within the channel 40, to bend and twist, as best seen in Figures 2 and 4. The oval sections 46 and 48 are each large enough to fit over that part of the multifiber optical ribbon cable 2 extending therethrough. However, oval channel portion 46 is oriented at a right angle relative to oval channel portion 48, so that the cable segment 4 will be twisted about its longitudinal axis after entering and before exiting the channel 40. Since a multifiber optical ribbon cable 2 is generally flat or planar with the optical fibers located side by side, it will be necessary to twist the flat ribbon cable 2 in order to bend the cable through an angle of ninety (90) degrees in the plane of the cable. The shape of a standard MTP fiber optic connector will dictate that just such a orientation will be required in certain applications. As shown in Figure 1, the ferrule 12 has an oblong shape in a standard MTP fiber optic connector. It is this ferrule that will mate with another optical component. In some applications this oblong ferrule will extend vertically when mated to a mating optical component. If the multifiber optical ribbon cable 2 is to extend either up or down in such an application, the cable must bend through an angle of ninety (90) degrees in the plane of the cable. Therefore the cable 2 must be twisted and the spring push adapter 10 provides space for this bend and twist transition in the curved, closed channel 40.

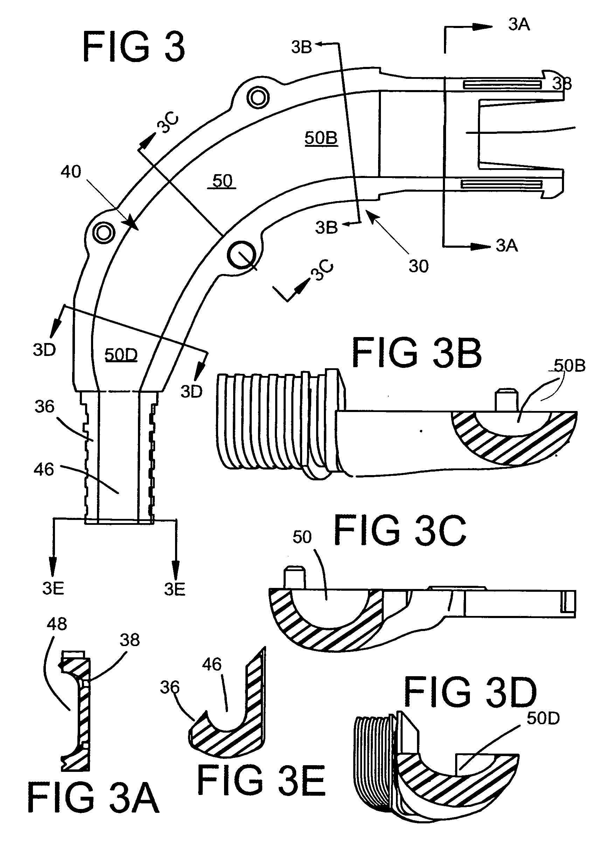

Figure 3 and section views 3A-3E show the shape of the closed channel 50 and the oval sections 44 and 48 at either end, which insure a smooth transition as the cable segment 4 is twisted and bent through an angle of ninety (90) degrees between opposite ends of the spring push adapter 30. The twist and bend of the cable segment within the channel 50 will progress evenly between opposite ends of the spring push adapter 30. In the prior art adapter 130 shown in Figure 5, the twist and bend can occur unevenly and the majority of the twist and bend can occur at one end of the channel 130. This can result in a tight radius, which can be less than the critical radius at which significant loss occurs in the optical signals transmitted through the optical fibers. The channel 40 of the instant invention is tapered between the central channel section 50 and the oval sections 46 and 48 at opposite ends of the channel 40. The central channel section 50 has the largest cross sectional area at the center of the channel 40 as seen in Figure 3C, where the channel has a generally circular cross-section as shown by the semi-circular shape of one half of the channel shown in Figure 3C. Figure 3B shows the ellipitical shape of the channel 40 in the channel section 50B adjacent to the oval section 48. Similarly Figure 3D shows the ellipitical shape of the channel 40 in the channel section 50D adjacent to the oval section 46 adjacent the opposite end of the channel 40. Comparison of Figures 3B, 3C, and 3D shows that the cross-sectional area of the channel is less in sections 3B-3B and 3D-3D than in section 3C-3C. A cable segment 4, when located in channel 40 cannot twist a full ninety (90) degrees in channel portions 50B and 50D. Only a partial twist and bend from the adjacent oval sections 46, 48 is possible. Since the oval portions 46 and 48 are mutually perpendicular it follows that some twist and bend must occur all along the length of the curved channel 40. Therefore excessive local twisting and bending can be prevented and the bending radius of the flat multifiber optical ribbon cable 2 need not be less than the critical radius at any point in the channel 40 or in the ninety (90) degree spring push adapter 30. In addition to guiding the multifiber optical ribbon cable 2 through this ninety (90) degree bend, the channel 40 completely encloses the bent and twisted segment to protect the cable from physical damage.

The two spring push adapter sections 32 and 34 can be mated after this twist and bend transition has been accomplished. A portion of the cable segment 4 can first be positioned in the oval entrance 46 of one of the adapter sections 32, 34. The cable segment 4 is then twisted and bent as shown in Figures 2 and 4 and another portion of the cable segment 4 closer to the cable end 2 will be placed in the oval exit 48. The two spring push adapter section 32, 34 can be mated enclosing the cable segment 4. When the two spring push adapter sections 32, 34 are mated, pins 53 will extend into opposed cavities 55.

A significant advantage of the two-piece spring push adapter 30 is that it can be assembled on the cable after the optical fibers have been terminated to the ferrule 12. Attachment of the optical fibers to the ferrule 12 is the most critical step in attaching a connector to the multifiber optical ribbon cable 2, and subsequent assembly of the right angle spring push adapter 30 will prevent complications with this more critical step, especially interference with polishing the ferrule end face. After the optical fibers have been terminated to the ferrule 12 in a conventional manner, the two mating sections 32 and 34 will be assembled over the cable. A coil spring 20 will then be positioned between the spring push stop surface 60 and the ferrule 12 and the ninety (90) degree spring push adapter 30 can slide into engagement with front portion of the connector assembly. The locking tabs 58 will engage surfaces on the interior of the inner housing 14 to attach the spring push adapter 30 as part of the connector and the coil spring 20 will be compressed to keep the ferrule 12 properly positioned. Although the oval entrance 46 and the oval exit 48 do substantially conform to the exterior of the cable segment 4, the fit is not tight and the cable segment 4 can slide through these oval openings. The central channel portion 50 is also large enough for the twisted and bent area of the cable to progress toward the cable end as the spring push adapter 30 is mated to the inner housing 14. After the spring push adapter 30 has been assembled to the front portion of the connector assembly in this manner, strength fibers in the cable 2 and the sheath 8 can be attached to the knurled surface 56 by a crimp ring 22. The offset at the adapter end 36 insures that the knurled surface 56 and the body on which this knurled surface is formed will be continuous and will not be interrupted by a slot, as the prior art embodiment of Figure 5. Adequate support will be provided by the body so that when the crimp ring 22 is crimped around the knurled surface 56, the adapter end 36 will not be inwardly deformed and will provide adequate support for the crimped ring 22. The cable sheath 8 and strength members can be trapped between the crimp ring 22 and the knurled surface 56 to secure the cable to the spring push adapter 30 and to the connector 10 in a conventional manner. The cable boot 18 can then slide into place surrounding the crimp ring 22 at the exit end of the spring push adapter 30. The cable boot 18 and the crimp ring 22 completely encircle the cable 2, and needs to be placed on the cable prior to termination of the optical fibers to the ferrule 12, but this procedure is standard for assembly of a conventional fiber optic connector, such as a conventional MTP connector with a cable exiting straight from the rear of the connector. Therefore the cable boot 18 and the crimp ring 22 would not interfere with termination of the optical fibers to the ferrule 12.

One representative embodiment of the spring push adapter 30 has been depicted herein. It should be understood the alternative embodiments could also employ substantially the same elements described herein, but the exact structure of these elements could differ. For example, it would not be necessary for the two mating adapter sections to be mirror images that mate along a central plane. Furthermore, a spring push adapter incorporating the basic elements described herein need not be limited to a ninety (90) degree configuration. Other applications could require an angled exit other than ninety (90) degrees. An inclined version with the cable exiting at an angle, such as forth-five (45) degrees could still be constructed in substantially the same manner. The two separate spring push adapter sections could also be molded as a one-piece hinged member in which the two adapter parts are joined by an integral hinge.

An alternate connector assembly 210 is shown in Figures 6 and 7. In this configuration the ferrule 12 and the cable boot 18 are oriented in such a manner that it is not necessary to twist the cable segment 4. The spring push adapter 230 still includes two mating sections 232 and 234, which completely enclose and protect the cable segment 4.

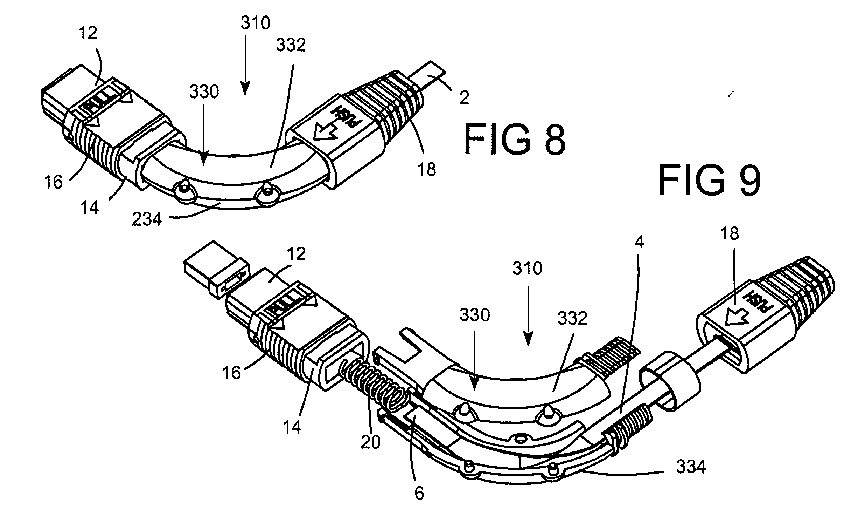

Another alternate connector assembly 310 is shown in Figures 8 and 9. In this configuration the cable segment 4 twist through an additional ninety degrees in order for the fibers to be properly aligned. Spring push adapter 330 includes tow mating sections 332 and 334, which completely enclose and protect the twisted cable segment 4.

Other modifications readily apparent to one of ordinary skill in the art could also be employed. Therefore, the invention described herein by reference to a representative embodiment, is defined by the following claims and is not limited to the one representative embodiment described in detail.

## Claims

1. A multifiber optical ribbon cable connection assembly comprising a ferrule, a spring and a spring push, the spring being positioned between the ferrule and the spring push, wherein the spring push has a first end and a second end and a curving channel extending between the first and second end, the channel permitting a multifiber optical ribbon cable to turn through an angle between the first and second ends of the spring push, and wherein the spring push comprises two opposed sections matable adjacent an exterior periphery of the channel and matable adjacent an interior periphery of the channel.

2. The multifiber optical ribbon cable connection assembly of claim 1 wherein the channel curves through an angle of ninety (90) degrees.

3. The multifiber optical ribbon cable connection assembly of claim 2 wherein the channel includes a generally oval entrance at the first end and a generally oval exit at the second end, the generally oval entrance and exit being oriented so that the multifiber optical ribbon cable twists through and angle of ninety (90) degrees between the entrance and exit of the spring push.

4. The multifiber optical ribbon cable connection assembly of claim 1 wherein the mutifiber spring push comprises two matable clamshell sections.

5. The multifiber optical ribbon cable connection assembly of claim 4 wherein the two matable clamshell sections comprise mirror images.

6. The multifiber optical ribbon cable connection assembly of claim 1 wherein the spring push sections are matable in surrounding relationship to the multifiber optical ribbon cable after the multifiber ribbon cable is attached to the ferrule.

7. The multifiber optical ribbon cable connection assembly of claim 1 wherein the spring push sections form a closed channel for completely enclosing the multifiber optical ribbon cable when attached to the ferrule.

8. The multifiber optical ribbon cable connection assembly of claim 1 wherein the ferrule, the spring, the spring push, an inner housing, an outer shroud and a boot form a MTP fiber optic connector.

9. The multifiber optical ribbon cable connection assembly of claim 1 wherein the spring push includes a knurled surface on the first end and locking tabs on the second end.

10. The multifiber optical ribbon cable connection assembly of claim 9 wherein the two opposed sections mate along a central plane of the spring push, except along the knurled surface on the first end.

11. A method of attaching a multifiber optical ribbon cable to a multifiber optical ribbon cable connector so that the multifiber optical ribbon cable extends from the multifiber optical ribbon cable connector at an angle, the method comprising the steps of:
terminating an end of the multifiber optical ribbon cable to a connector ferrule;
subsequently twisting and bending a segment of the multifiber optical ribbon cable to position the segment of the multifiber optical ribbon cable in a curved groove formed in a first spring push adapter section with a spring extending between the first spring push adapter section and the connector ferrule;
subsequently mating a second spring push adapter section to the first spring push adapter section to enclose the segment of the multifiber optical ribbon cable in a channel formed by grooves in mated spring push adapter sections; and
attaching a boot to the mated spring push adapter sections.

12. The method of claim 11 wherein the segment of the multifiber optical ribbon cable is bent and twisted through an angle of ninety (90) degrees.
